# EUROPEAN PATENT APPLICATION

(11) **EP 4 606 529 A1**
(43) Date of publication of application: **27.08.2025**
(21) Application number: 25159558.3
(22) Date of filing: 24.02.2025
(51) Int. Cl.: B25J 1/02, B25J 1/04

(54) **REACHING AND GRASPING TOOL WITH CO-MOLDED JAW**

(30) Priority: 26.02.2024 US 202418586854
(71) Applicant: Unger Marketing International, LLC, Bridgeport CT 06610 (US)
(72) Inventor: XIAO, Hengfei, Zhangmutou Town, Gongguan City, GD 523616 (CN); PATTERSON, Joseph K., Monroe, Connecticut 06468 (US)
(74) Representative: Müller Schupfner & Partner Patent- und Rechtsanwaltspartnerschaft mbB (Muc)

(57) **Abstract**

A reaching and grabbing tool is provided. The tool includes a trigger assembly having at least one trigger and a handle. A jaw assembly is provided having at least one jaw operably connected to the at least one trigger to move the at least one jaw. A hinge assembly is disposed between the trigger assembly and the jaw assembly, the hinge assembly being selectively lockable between an operating position and a folded position.

## Description

### BACKGROUND

The subject matter disclosed herein relates to a reaching and grasping tool, and more particularly to a reaching and grasping tool that is foldable.

Reaching and grasping tools have proven useful to extend the reach of users to, for example, grasp items above the user (e.g., on a shelf) or below the user (e.g., on the ground).

These tools typically have a trigger or actuator that causes a pair of gripping heads to open and close. The trigger and the gripping head are separated by a pole. In some cases the poles are telescoping extensions that allow the user to reach for items at different distances. One challenge with these devices includes the storage or transportation/carrying of the item when it is not in use. The length of the pole makes it inconvenient to carry and it won't fit in typical storage containers, such as a pocketbook/bag or a backpack.

Accordingly, while existing reaching and grasping tools are suitable for their intended purposes the need for improvement remains, particularly in providing a reaching an grasping tool having the features described herein.

### BRIEF DESCRIPTION

According to one aspect of the disclosure a reaching and grabbing tool is provided. The tool includes a trigger assembly having at least one trigger and a handle. A jaw assembly is provided having a first jaw and a second jaw with the second jaw operably connected to the at least one trigger to move the second jaw. A hinge assembly is disposed between the trigger assembly and the jaw assembly.

In addition to one or more of the features described herein, or as an alternative, further embodiments of the tool may include, the hinge assembly being selectively lockable between an operating position and a folded position at which the jaw assembly is sidelong-adjacent the trigger assembly and out-of- plane from the handle.

**In** addition to one or more of the features described herein, or as an alternative, further embodiments of the tool may include the trigger assembly further comprising a housing including a rack, a first trigger operably connected to the second jaw, and a second trigger rotatably coupled to the first trigger. In addition to one or more of the features described herein, or as an alternative, further embodiments of the tool may include the trigger assembly further comprising a housing having a rack, and a second trigger rotatably coupled to the first trigger, the second trigger having a plurality of teeth positioned to selectively engage the rack.

**In** addition to one or more of the features described herein, or as an alternative, further embodiments of the tool may include the first jaw being in a fixed position relative to the hinge assembly and the second jaw is configured to move from an open position to a second position in response to movement of the at least one trigger. In addition to one or more of the features described herein, or as an alternative, further embodiments of the tool may include the second jaw having a plurality of teeth located on the proximal end. In addition to one or more of the features described herein, or as an alternative, further embodiments of the tool may include the jaw assembly including a moveable actuator where the moveable actuator includes a plurality of teeth with a greater number of teeth than the plurality of teeth of the second jaw. In addition to one or more of the features described herein, or as an alternative, further embodiments of the tool may include these pairs of teeth cooperating to move the second jaw.

In addition to one or more of the features described herein, or as an alternative, further embodiments of the tool may include a cable operably coupled between the first trigger and the at least one jaw, the cable extending through the hinge assembly. In addition to one or more of the features described herein, or as an alternative, further embodiments of the tool may include the second trigger further comprising a pair of teeth, wherein the cable passes through the pair of teeth. In addition to one or more of the features described herein, or as an alternative, further embodiments of the tool may include the second trigger and the first trigger cooperate to hold the first jaw and the second jaw in a selected position. In addition to one or more of the features described herein, or as an alternative, further embodiments of the tool may include a first biasing member operably coupled between the second trigger and the first trigger.

In addition to one or more of the features described herein, or as an alternative, further embodiments of the tool may include a first pole coupled between the trigger assembly and the hinge assembly; and a second pole coupled between the hinge assembly and the jaw assembly, a flexible rod coupled to the first jaw and extending through a distal portion of the second pole, wherein the cable is coupled to the first trigger and extending through the first pole, the hinge assembly and a proximal portion of the second pole, and a second biasing member coupled between the cable and the flexible rod and extending through the second pole, the second biasing member includes a compressed position and an extended position.

In addition to one or more of the features described herein, or as an alternative, further embodiments of the tool may include In addition to one or more of the features described herein, or as an alternative, further embodiments of the tool may include the hinge assembly is in the operating position relative to the second biasing member in the compressed position and the hinge assembly is in the folded position relative to the second biasing member in the extended position.

In addition to one or more of the features described herein, or as an alternative, further embodiments of the tool may include the first trigger being rotatably coupled to the housing via a first pivot and the second trigger is rotatably coupled to the first trigger via a second pivot which is separate from the first pivot.

In addition to one or more of the features described herein, or as an alternative, further embodiments of the tool may include the hinge assembly further comprising a first housing including a first tubular projection, the first tubular projection configured to couple to the first pole, a second housing including a second tubular projection, the second tubular projection configured to couple to the second pole, a lock and a release button.

In addition to one or more of the features described herein, or as an alternative, further embodiments of the tool may include the first housing including a recess, the lock pawl being movably disposed in the recess, a third biasing member disposed to bias the lock pawl into the recess, and the release button operably coupled to the lock pawl.

In addition to one or more of the features described herein, or as an alternative, further embodiments of the tool may include the lock pawl arranged to move from an engaged position within the recess to a released position in response to movement of the release button.

In addition to one or more of the features described herein, or as an alternative, further embodiments of the tool may include the lock pawl is in the engaged position when the hinge assembly is in the operating position and when the hinge assembly is in the folded position.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken m conjunction with the accompanying drawings in which:
FIG. 1 is a perspective view of a reaching and grasping tool m accordance with an embodiment;
FIG. 2A is a side view of the handle of the tool of FIG. 1;
FIG. 2B is an opposite side view of FIG. 2A of the handle of the tool of FIG. 1;
FIG. 3 is a partial sectional view of the trigger assembly for the tool of FIG. l;
FIG. 4 is a perspective view of the jaw assembly for the tool of FIG. l;
FIG. 5 is an unassembled view of a portion of the jaw assembly for the tool of FIG. 1;
FIG. 6 partial sectional view of the jaw assembly and the pole for the tool of FIG. 1;
FIG. 7 is an unassembled view of the pole for the tool of FIG. 1; and
FIG. 8 is an unassembled view of the hinge assembly for the tool of FIG. 1.

The detailed description explains embodiments of the disclosure, together with advantages and features, by way of example with reference to the drawings.

### DETAILED DESCRIPTION

A foldable reaching and grabbing tool is provided that has gripping head with at least one jaw operatively connected to a trigger for movement with respect to a gripping axis. In an embodiment, the gripping head defines at least one region configured to provide a plurality of gripping states.

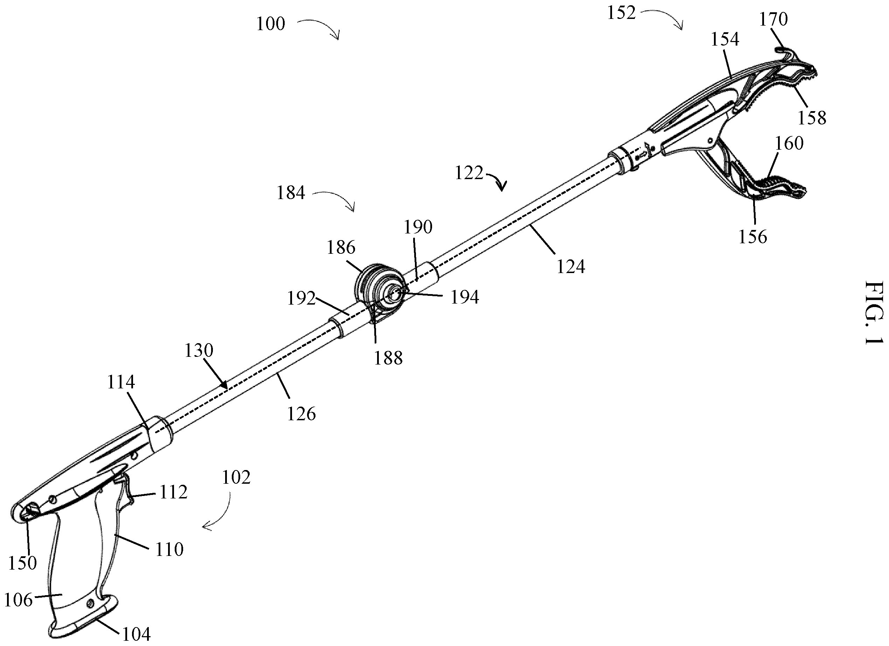

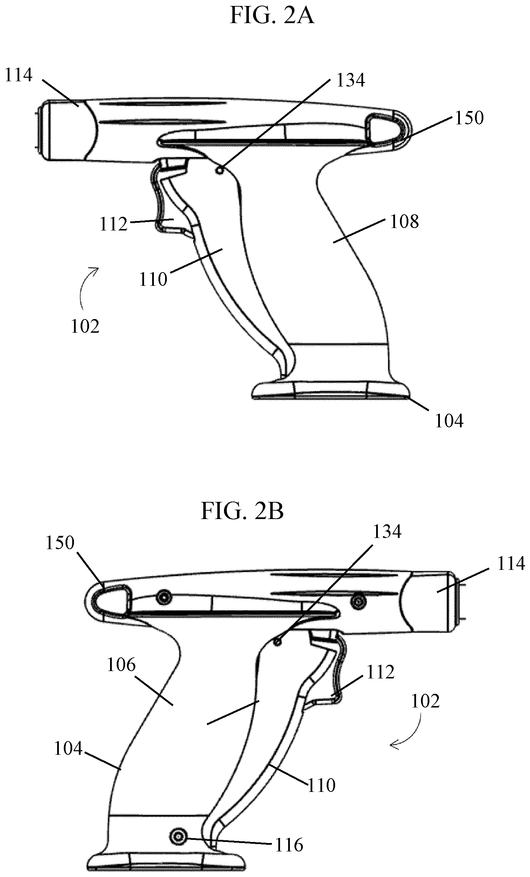

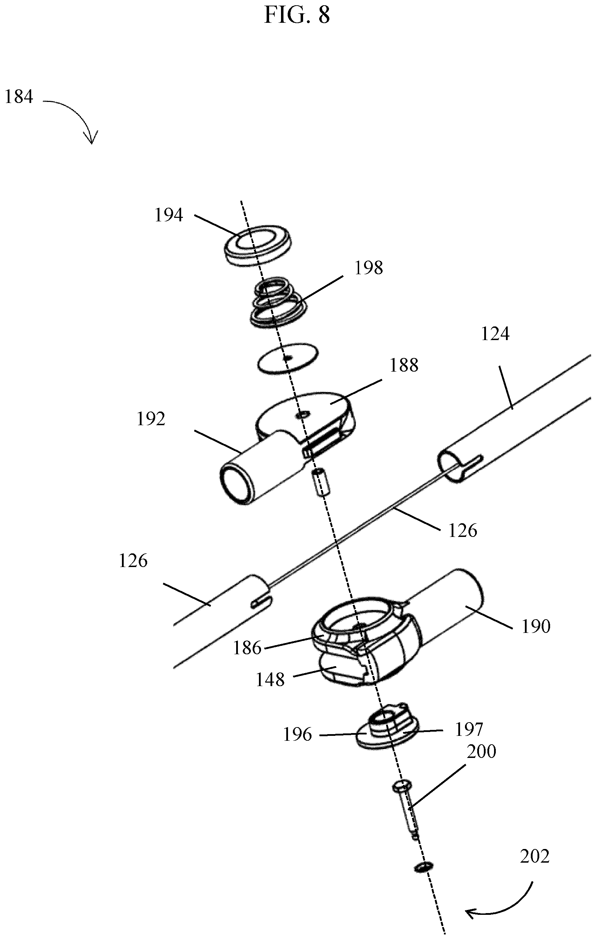

Referring now to FIGs. 1 - 8 an embodiment is shown of a reaching and grabbing tool 100. The reaching and grabbing tool 100 includes a pole 122, trigger assembly 102, a jaw assembly 152 and a hinge assembly 184 disposed therebetween. The pole 122 includes a first pole end 124 and a second pole end 126. The hinge assembly 184 is separated from the trigger assembly 102 by the first pole end 124. The hinge assembly 184 is separated from the jaw assembly 152 by the second pole end 126. The hinge assembly 184 has an axis of rotation 202 (FIG. 8) that is offset from the main axis 130 of the first pole end and second pole end 124, 126. As will be discussed in more detail herein, the offset of the axis of rotation 202 facilitates the folding of the reaching and grabbing tool 100 to a folded position with the jaw assembly 152 adjacent the trigger assembly 102.

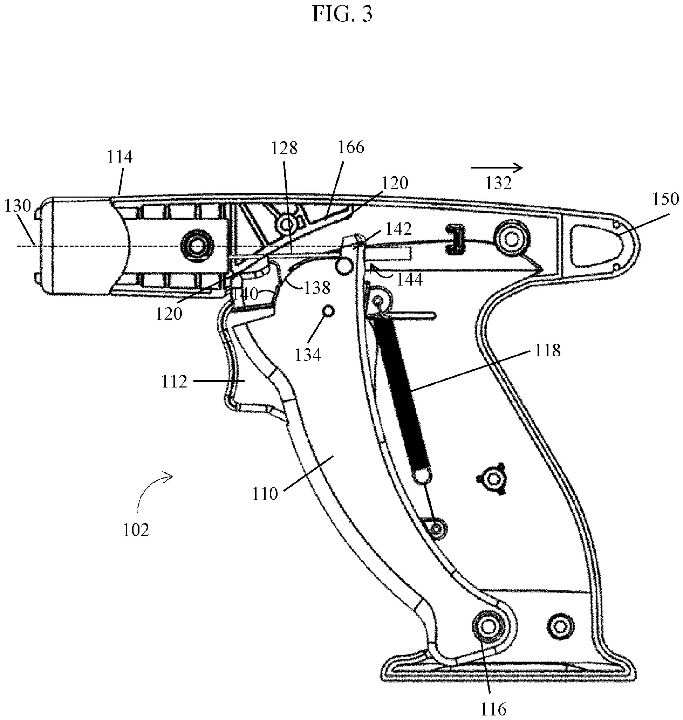

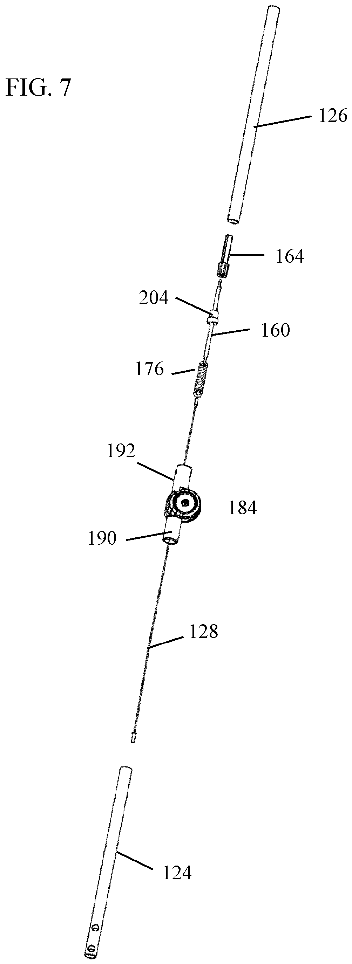

The trigger assembly 102 includes a hole 150 positioned on the back end for storing the tool 100 on a hook or similar means. The trigger assembly 102 further includes a housing 104 that may be formed by a first half 106 and a second half 108 that are then coupled together to define a hollow interior. In the illustrated embodiment, the housing 104 acts as the handle for the user to hold and manipulate the reaching and grabbing tool 100 during use. The housing 104 can be in the shape of a pistol grip that has a hollow interior to allow a portion of a jaw actuation trigger 110 and a ratchet trigger 112. The housing 104 further includes a barrel portion 114 on an end of the pistol grip. The barrel portion 114 couples with the first pole end 124. The jaw actuation trigger 110 is rotatably coupled to the housing 104 by a pivot 116 (FIG. 3). In the illustrated embodiment, the pivot 116 is positioned near a bottom of the housing 104. An opposite end of jaw actuation trigger 110 is a tab 142 having a hole 144 extending therethrough. A cable crimp and washer (not shown for clarity) is coupled to the cable adjacent hole 144 to fix or couple a cable 128 to the jaw activation trigger 110. The cable 128 extends through the pole 122 and the hinge assembly 184 to connect the trigger assembly 102 to the jaw assembly 152 (FIG. 7). As discussed in more detail herein, in one embodiment, the end of the cable opposite the trigger assembly 102 is coupled to biasing member, for example an inline spring or rod with give. It should be appreciated that when a user squeezes the jaw activation trigger 110, the jaw activation trigger 110 rotates about the pivot 116 causing the cable 128 to move in the direction indicated by arrow 132. As will be discussed in more detail herein, then the jaw activation trigger 110 is released, a biasing member 176 in the jaw assembly 152 causes the cable 128 to move in the opposite direction and the jaw activation trigger 110 returns to the original position.

In the illustrated embodiment, the jaw activation trigger 110 includes a pair of parallel side walls. The side walls define a channel sized to receive the ratchet trigger 112. The ratchet trigger 112 is coupled to the side walls by a pivot 134. The ratchet trigger 112 is movable between an engaged position and a disengaged position, moving from the engaged position to the disengaged position in the direction of arrow 132. The ratchet trigger 112 includes a plurality of teeth 120 that are positioned to engage a rack 146 formed into the housing 104. A biasing member 118, such as a spring is coupled between the ratchet trigger 112 and an arm on the jaw activation trigger 110. The position of the spring 118 attachment on the ratchet trigger 112 is configured to rotate the teeth 120 into the rack 146. In an embodiment, the ratchet trigger 112 includes two pairs of teeth 120 that are arranged on either side of the main axis 130. This allows the cable 128 to pass and move therebetween.

The ratchet trigger 112 and the jaw activation trigger 110 cooperate to allow the user to grasp and carry an item without having to continuously squeeze the jaw activation trigger. The user can selectively release the object by squeezing the ratchet trigger 112 to disengage the teeth 120 from the rack 146. When the user squeezes the jaw actuation trigger 110, it rotates about the pivot 116. When the user releases the jaw actuation trigger 110, and the ratchet trigger 112 is also not squeezed, the engagement of the teeth 120 keeps the ratchet trigger 112 in place and prevents the jaw actuation trigger 110 from rotating back towards the unreleased or open position. In an embodiment, a portion of the surface 138 engages the surface 140 to prevent rotation of the triggers 110, 112 relative to each other. As a result, the user may select the amount of force to apply to the gripped item without having to continuously squeeze the jaw actuation trigger 110.

Further, by keeping the ratchet trigger 112 squeezed, while actuating the jaw actuation trigger 110, the teeth 120 remain released from the rack 146 to allow normal free grasping and release of the jaw assembly 152. When the ratchet trigger 112 is squeezed without squeezing or movement of the jaw actuation trigger 110, the jaw assembly 152 will remain in a locked position around the gripped item without the user having to maintain a squeezing force. Pressing and holding the ratchet trigger 112 releases the teeth 120 from the rack 136, allowing the jaw actuation trigger 110 to be squeezed and rotate back and thus release the jaw assembly and cause the jaws to move to an open position.

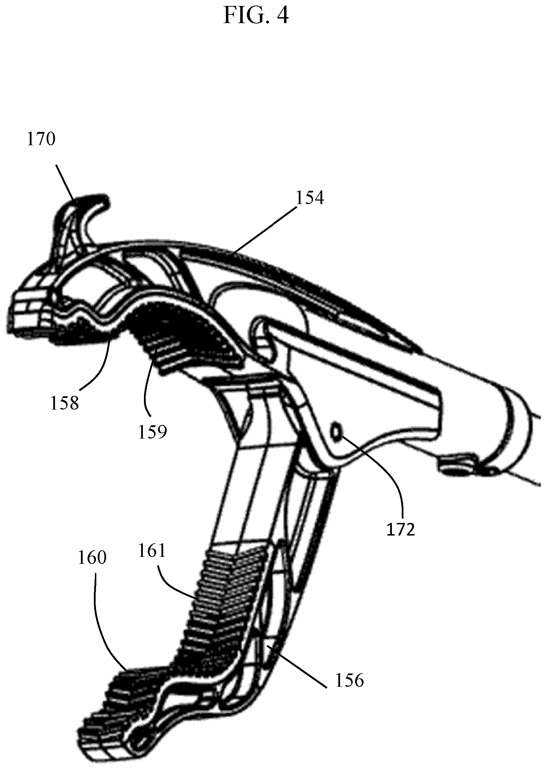

Referring now to FIG. 4, the jaw assembly 152 is shown in an open position. The jaw assembly 152 includes a first jaw 154 and a second jaw 156. In an embodiment, the first jaw 154 is fixed and the second jaw 156 is moveably coupled to the first jaw 154, such as by a pivot 172. Each of the jaws 154, 156 have a first and a second grip surfaces 158, 160 that allows for multiple sizes of objects to be grasped therebetween. In an embodiment, the first and second grip surfaces 158, 160 includes a layer thereon made from a soft and non-slip material. In an embodiment, the layer on the first and second grip surfaces 158, 160 may be made from one or more of polyester, polypropylene (PP), polyvinyl chloride (PVC), thermoplastics, or thermoplastic elastomer (TPE), for example. In an embodiment, the layer is co-molded/over-molded and made from TPE having a hardness of 55 or 80 Shore A. In an embodiment, either of both of the first and second grip surfaces 158, 160 may include a plurality of grooves or teeth 159, 161 for gripping the item held in the jaws 154, 156. In The plurality of grooves or teeth are cross-meshed. This allows for a "sealed" grip and provides advantages in reducing the risk of or eliminating flat gaps that occurs between flat surfaces or textured surfaces that are not cross-meshed.

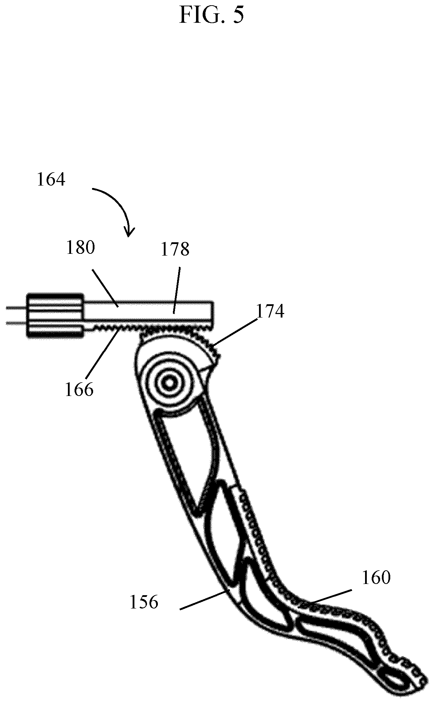

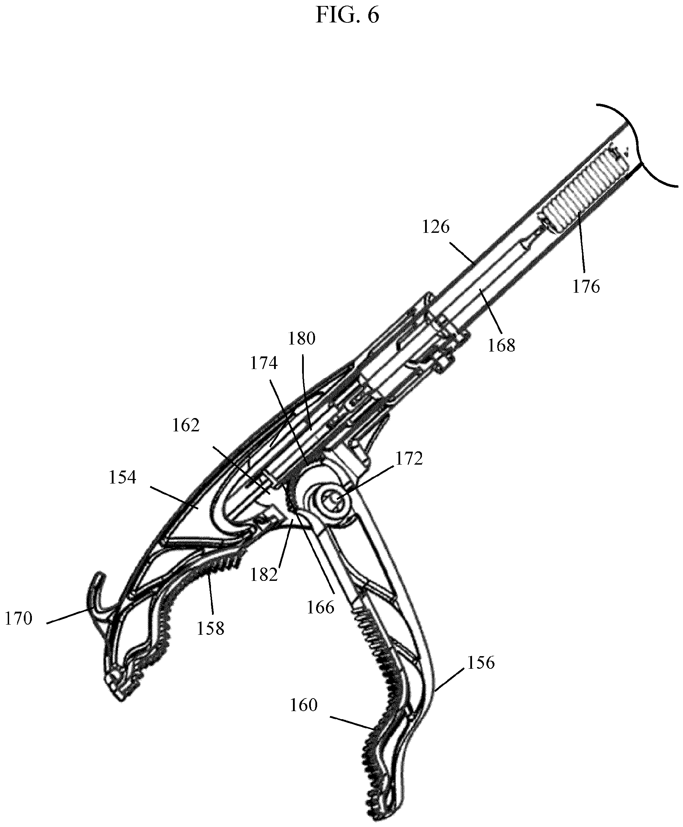

Referring now to FIGS. 5 and 6, the first jaw 154 includes an opening 162 at the end of the second pole end 126 near the jaw assembly 152. The end of the second pole end 126 near the jaw assembly 152 is sized to receive and couple with the opening 162. Arranged within the opening 162 is a movable actuator 164 that includes a rack portion 178 and a body portion 180. The rack portion 178 includes a plurality of teeth 166. The body portion 180 has an outer surface shaped to conform with the opening 162 to allow the actuator 164 to slide within the hole. The body portion 180 further includes a bore at one end sized to receive a puller rod or linkage member 168, that connects with a biasing member 176. In this embodiment, the linkage member 168 is disposed between the actuator 164 and a collar 204 that is fixedly coupled to the inner diameter of the pole 122. In an alternative embodiment, the linkage member 168 is a flexible rod. In this embodiment the flexible rod improves the connection between the biasing member 176 and the moveable actuator 164 with its increased rigidity.

In an embodiment, the first jaw 154 may have a projection 170 disposed on a side opposite the second jaw 156. The projection 170 may be in the shape of a hook, defining a generally u-shaped slot. It should be appreciated that the projection 170 provides advantages in allowing the user to pick things up with the projection 170 that may be difficult with the jaws 154, 156. The projection 170 may also be used for hanging the reaching and grabbing tool 100 when not in use.

The second jaw 156 is coupled to the first jaw 154 by a pivot 172 and is positioned with in a recess 182 formed in the first jaw 154. The second jaw 156 includes a first end having a plurality of teeth 174 formed on the end. The teeth 174 are sized, shaped, and positioned to engage the plurality of teeth 166 on the rack portion 178 of the actuator 164. In an embodiment, the rack portion can include more teeth 166 than the number of teeth 174 on the second jaw 156. This improves the close connection between the first jaw 154 and the second jaw 156, thereby reducing the force exerted by the user when squeezing the trigger assembly 102. In the illustrated embodiment, the recess 182 of the first jaw 154 is in communication with the opening 162. In this embodiment, the end of the second jaw 156 and the pivot 172 are disposed within the recess 182. In operation, when the jaw actuation trigger 110 is moved, the end of the cable 128 is pulled towards the trigger assembly 102, causing the actuator 164 to slide within the opening 162. As the actuator 164 moves, the engagement of the rack portion 178 with the teeth 174 causes the rotation of the second jaw 156. The movement of the actuator 164 further compresses the biasing member 176. When the user releases the jaw actuation trigger 110, the biasing member 176 biases the actuator 164 in a direction away from the trigger assembly 102 causing a reversal in the rotation of the second jaw 156.

In another embodiment, the cable is split or bifurcated into a first cable and a second cable. The cables are connected with the biasing member 176, such as extension spring for example. In another embodiment, the cable is a single cable and is connected to the rod 168 with the biasing member 176. In both embodiments, the biasing member 176 provides additional elasticity in the cable path that provides advantages in extending the cable spring assembly to take up the increased path length between the trigger assembly and the jaws when the reaching and grabbing tool 100 is folded. The biasing member 176 further provides additional advantages in keeping tension on the first jaw 154 when grasping an item with the reaching and grabbing tool 100. The biasing member 176 provides still further advantages in allowing further stroke (e.g. movement of the jaw actuation trigger 110) on the trigger assembly 102 after the jaw movement is stopped when it comes into firm contact with the targeted object.

Referring now to FIGS. 7 and 8, an embodiment of the hinge assembly 184 is shown. The hinge assembly 184 includes a first housing 158 having a first tubular projection 190 that is sized and configured to couple with the first pole end 124. The hinge assembly 184 further includes a second housing 188 having a second tubular projection 192 that is sized and configured to couple with the second pole end 126. A release button 194 is coupled to the first housing 158, and a lock pawl 196 and a biasing member 198 are disposed within the first housing and second housing 158, 188. The first housing and second housing 158, 188 are coupled together by a fastener 200. In an embodiment, the biasing member 198 is a spring, such as a conical compression spring for example.

The lock pawl 196 includes at least one projection 197 that engages and cooperates with a slot or recess portion of recess 148 in the first housing 158. In response to the user depressing the release button 194, the lock pawl 196 moves axially or laterally causing the projection 197 to move out of the slot in housing 186. As a result, the first housing 158 and the second housing 188 can rotate relative to each other. In an embodiment, once the first housing and second housing 158, 188 are rotated relative to each other, the top end of the lock pawl 196 engages with a surface of the first housing 158 to prevent locking of the hinge assembly 184 until the projection and slot are once again aligned. Once the projection and the slot are aligned, the lock pawl 196 and the release button 194 are moved by the biasing member 198 back into the locked position and relative rotation between the first housing 158 and the second housing 188 is prevented. In an embodiment, when the tool is in a fully folded position and in an operating position, the teeth are aligned with the recess portions. In other words, in this embodiment, the reaching and grabbing tool 100 will be locked in both the operating position and the folded position until the user depresses the release button 194.

When the release button 194 is depressed and the hinge assembly 184 is unlocked, the reaching and grabbing tool 100 may be moved from the operating or extended position (FIG. 1) to a folded position. When in the folded position, the jaw assembly 152 is positioned adjacent the trigger assembly 102. It should be appreciated that the ability to fold the reaching and grabbing tool 100 provides advantages in reducing the length of the reaching and grabbing tool 100 to facilitate storage or transportation of the reaching and grabbing tool 100, such as by allowing it to be stored in a drawer or carried in a handbag for example.

In some embodiments, the folding of the reaching and grabbing tool 100 from the operating position to the folding position increases the distance between the tab 142 and the actuator 164. Thus, as the reaching and grabbing tool 100 is folded, the actuator 164 will move against and compressing the compression spring 176 to compensate for the change in length. As a result, during the folding process, the first jaw 154 may move.

The reaching and grabbing tool 100 may include additional features described below.

In addition to one or more of the features described herein, or as an alternative, further embodiments of the tool may include the layer being made from thermoplastic elastomer.

In addition to one or more of the features described herein, or as an alternative, further embodiments of the tool may include the layer having a hardness of 80 Shore A.

In addition to one or more of the features described herein, or as an alternative, further embodiments of the tool may include a first pole coupled between the trigger assembly and the hinge assembly and a second pole coupled between the hinge assembly and the jaw assembly. The cable comprises a first cable coupled to the first trigger and extending through the first pole, the hinge assembly and a proximal portion of the second pole, a second cable coupled to the second jaw and extending through a distal portion of the second pole, and a second biasing member coupled between the first cable and the second cable and extending through the second pole, the second biasing member includes a compressed position and an extended position.

In addition to one or more of the features described herein, or as an alternative, further embodiments of the tool may include the cable having a first length in the compressed position and a second length in the extended position.

In addition to one or more of the features described herein, or as an alternative, further embodiments of the tool may include a biasing member, wherein the cable is further comprised of a first cable coupled to the first trigger and a second trigger coupled to the at least one jaw, and the biasing member is coupled between the first cable and the second cable. In addition to one or more of the features described herein, or as an alternative, further embodiments of the tool may include a biasing member, wherein the cable is coupled to the first trigger and a second trigger coupled to the second jaw, and the biasing member is coupled between the cable and a flexible rod.

In addition to one or more of the features described herein, or as an alternative, further embodiments of the tool may include a biasing member coupled between the at least one jaw and the cable.

In addition to one or more of the features described herein, or as an alternative, further embodiments of the tool may include the hinge assembly having a lock that is selectively engagable based at least in part on the position of the jaw assembly relative to the trigger assembly. In addition to one or more of the features described herein, or as an alternative, further embodiments of the tool may include the lock having a first housing with a recess, a lock pawl movably disposed in the recess, a biasing member disposed to bias the lock pawl into the recess, and a release button operably coupled to the lock pawl. In addition to one or more of the features described herein, or as an alternative, further embodiments of the tool may include the lock pawl being arranged to move from an engaged position within the recess to a released position in response to movement of the release button.

According to another aspect of the disclosure a reaching and grabbing tool is provided. The tool including a trigger assembly having at least a first trigger. A hinge assembly is coupled to and spaced apart from the trigger assembly, the hinge assembly being selectively rotatable between an operating position and a folded position. A jaw assembly is coupled to and spaced apart from the hinge assembly, the jaw assembly having at least one jaw operably coupled to the first trigger, the at least one jaw being configured to move from an open position to a second position in response to movement of the first trigger.

In addition to one or more of the features described herein, or as an alternative, further embodiments of the tool may include the first jaw having a hole, and the jaw assembly further having a movable actuator disposed in the hole and being operably coupled to the at least one jaw, the movable actuator being coupled to the cable. In addition to one or more of the features described herein, or as an alternative, further embodiments of the tool may include the actuator having a rack and the second jaw includes a plurality of teeth, the rack and the plurality of teeth cooperating to rotate the second jaw in response to a movement of the cable. In addition to one or more of the features described herein, or as an alternative, further embodiments of the tool may include the jaw assembly further having a biasing member disposed to bias the actuator to rotate the at least one jaw to an open position.

In addition to one or more of the features described herein, or as an alternative, further embodiments of the tool may include the trigger assembly further having a second trigger rotatably coupled to the first trigger, the second trigger being selectively lock a position of the first trigger in response to movement of the first trigger. In addition to one or more of the features described herein, or as an alternative, further embodiments of the tool may include the second trigger being configured to selectively release the first trigger in response to a movement of the second trigger. In addition to one or more of the features described herein, or as an alternative, further embodiments of the tool may include the second trigger and the first trigger cooperate to hold the at least one jaw in place in a given position. In addition to one or more of the features described herein, or as an alternative, further embodiments of the tool may include the second trigger and the first trigger cooperate to hold the at least one jaw in place in a given position.

In addition to one or more of the features described herein, or as an alternative, further embodiments of the tool may include the hinge assembly further having a lock that selectively holds the first pole and the second pole in an operating position and a folding position. In addition to one or more of the features described herein, or as an alternative, further embodiments of the tool may include the lock comprising: a first housing having a recess with a pair of recess portions; a lock pawl selectively engagable with the recess, the lock pawl having a pair of teeth, the pair of teeth engaging the pair of recess portions when the lock pawl is engaged in the recess; a release button movably coupled to the first housing an operably coupled to the lock pawl, the release button moving the lock pawl from engaging the recess in response to movement of the release button; and a biasing member operably coupled to the lock paw to move the lock pawl into the recess when the teeth are aligned with the recess portions.

The term "about" is intended to include the degree of error associated with measurement of the particular quantity based upon the equipment available at the time of filing the application.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection". It should also be noted that the terms "first", "second", "third", "upper", "lower", and the like may be used herein to modify various elements. These modifiers do not imply a spatial, sequential, or hierarchical order to the modified elements unless specifically stated.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A reaching and grabbing tool comprising:
a trigger assembly having at least one trigger and a handle;
a jaw assembly having a first jaw and a second jaw moveably coupled to the first jaw, the second jaw is operably connected to the at least one trigger to move the second jaw, each of the first jaw and second jaw having a layer co-molded over at least a portion of an outer surface; and
a hinge assembly disposed between the trigger assembly and the jaw assembly.

2. The tool of claim 1, wherein the hinge assembly is selectively lockable between an operating position and a folded position at which the jaw assembly is sidelong-adjacent the trigger assembly and out-of- plane from the handle.

3. The tool of claim 1, wherein the trigger assembly further comprises: a housing
comprising a rack;
a first trigger operably connected to the second jaw and rotatably coupled to the housing; and a second trigger rotatably coupled to the first trigger and having a plurality of teeth positioned to selectively engage the rack.

4. The tool of claim 1, wherein the first jaw is in a fixed position relative to the hinge assembly and the second jaw is configured to move from an open position to a second position in response to movement of the at least one trigger.

5. The tool of claim 1, the second jaw further comprises a plurality of teeth; and
the jaw assembly further comprises a moveable actuator including a plurality of teeth, the plurality of teeth of the moveable actuator includes a greater number of teeth than the plurality of teeth of the second jaw,
wherein the plurality of teeth of the moveable actuator and the plurality of teeth of the second jaw cooperate the move the second jaw between the open position and the second position.

6. The tool of claim 2, further comprising a cable operably coupled between the first trigger and the jaw assembly, the cable extending through the hinge assembly.

7. The tool of claim 6, wherein:
the second trigger includes a pair of teeth;
the cable passes through the pair of teeth of the second trigger; and
the first trigger and the second trigger cooperate to hold the first jaw and the second jaw in a selected position.

8. The tool of claim 3, further comprising a first biasing member operably coupled between the second trigger and the first trigger.

9. The tool of claim 6, further comprising:
a first pole coupled between the trigger assembly and the hinge assembly; and a second pole coupled between the hinge assembly and the jaw assembly;
a flexible rod coupled to the first jaw and extending through a distal portion of the second pole,
wherein the cable is coupled to the first trigger and extending through the first pole, the hinge assembly and a proximal portion of the second pole; and
a second biasing member coupled between the cable and the flexible rod and extending through the second pole, the second biasing member includes a compressed position and an extended position.

10. The tool of claim 9, wherein the hinge assembly is in the operating position relative to the second biasing member in the compressed position and the hinge assembly is in the folded position relative to the second biasing member in the extended position.

11. The tool of claim 2, wherein the first trigger is rotatably coupled to the housing via a first pivot and the second trigger is rotatably coupled to the first trigger via a second pivot which is separate from the first pivot.

12. The tool of claim 9, wherein the hinge assembly further comprises:
a first housing including a first tubular projection, the first tubular projection configured to couple to the first pole;
a second housing including a second tubular projection, the second tubular projection configured to couple to the second pole;
a lock; and
a release button.

13. The tool of claim 12, wherein the first housing includes a recess, the lock pawl movably disposed in the recess, a third biasing member disposed to bias the lock pawl into the recess, and the release button operably coupled to the lock pawl.

14. The tool of claim 13, wherein the lock pawl is arranged to move from an engaged position within the recess to a released position in response to movement of the release button.

15. The tool of claim 14, wherein the lock pawl is in the engaged position when the hinge assembly is in the operating position and when the hinge assembly is in the folded position.
